# EUROPÄISCHE PATENTSCHRIFT

(11) **EP 3 096 930 B1**
(45) Veröffentlichungstag und Bekanntmachung des Hinweises auf die Patenterteilung: **14.08.2019**
(21) Anmeldenummer: 14790025.2
(22) Anmeldetag: 13.10.2014
(51) Int. Cl.: B29C 33/34, B29C 33/30, B29C 31/00, B29C 70/38

(54) **FASERLEGEMASCHINE UND VERFAHREN ZUR HERSTELLUNG VON FASERGELEGEN**
FIBRE-LAYING MACHINE AND METHOD FOR PRODUCING LAID FIBRE WEBS
MACHINE DE PLACEMENT DE FIBRES ET PROCÉDÉ DE PRODUCTION DE NAPPES DE FIBRES

(30) Priorität: 22.01.2014 DE 102014201060
(43) Veröffentlichungstag der Anmeldung: 30.11.2016
(73) Patentinhaber: Broetje-Automation GmbH, 26180 Rastede (DE)
(72) Erfinder: BÄURLE, Armin, 89551 Königsbronn (DE); HAUPT, Sebastian, 68163 Mannheim (DE); VESTER, Tobias, 73119 Zell unter Aichelberg (DE); MEYER, Matthias, 79576 Weil am Rhein (DE); FINK, Michael, 73230 Kirchheim (DE)
(74) Vertreter: Gottschald, Jan
(86) Internationale Anmeldenummer: PCT/EP2014/071837
(87) Internationale Veröffentlichungsnummer: WO 2015/110187

(56) Entgegenhaltungen:
- JP-A- S5 734 915
- US-A- 3 574 040

## Beschreibung

Die Erfindung betrifft eine Faserlegemaschine zur Herstellung von Fasergelegen gemäß dem Oberbegriff des Anspruchs I. Ferner betrifft die Erfindung ein Verfahren zur Herstellung von Fasergelegen.

Aus der WO 2009/042 225 A2 ist eine Faserlegemaschine zur Herstellung von Fasergelegen bekannt. Die Faserlegemaschine weist einen dreiachsigen Tisch auf, der relativ zu einem Faserlegekopf um eine vertikale Drehachse drehbar und in zwei Richtungen linear verfahrbar ist. Auf dem dreiachsigen Tisch ist ein Vakuumtisch angeordnet, der als glatte Werkzeugoberfläche dient. Der Faserlegekopf ist oberhalb des Vakuumtischs fest an einem Maschinengestell angeordnet und weist Führungsschienen für ein Faserband auf, die mittels eines linearen Aktuators in einer vertikalen Richtung verlagerbar sind, um das Faserband zu der Werkzeugoberfläche zuzustellen. Ferner ist in der US 3,574,040 eine Faserlegemaschine beschrieben.

Der Erfindung liegt die Aufgabe zugrunde, eine Faserlegemaschine zu schaffen, die auf einfache, flexible und effiziente Weise die Herstellung von Fasergelegen ermöglicht.

Diese Aufgabe wird durch eine Faserlegemaschine mit den Merkmalen des Anspruchs 1 gelöst. Dadurch, dass der Faserlegekopf mittels des y-Schlittens oberhalb des Werkzeugtischs in der horizontalen y-Richtung linear verfahrbar ist, muss der Werkzeugtisch zur Herstellung von Fasergelegen lediglich in der quer bzw senkrecht zu der y-Richtung verlaufenden x-Richtung linear verfahrbar und um die vertikal verlaufende Schwenkachse verschwenkbar sein, um Fasergelege mit beliebiger Faserorientierung herstellen zu können. Durch diese Achsenanordnung ist ein einfaches Positionieren des Werkzeugtischs inklusive des darauf angeordneten Formwerkzeugs möglich. Damit verbunden ist ein schnelles Be- und Entladen, so dass die Faserlegemaschine eine hohe Produktivität aufweist. Insbesondere ist durch die ausschließliche Verfahrbarkeit des Werkzeugtischs in der x-Richtung ein einfaches und schnelles automatische Be- und Entladen möglich. Da der Faserlegekopf lediglich linear verfahrbar ist, also der Faserlegekopf keine vertikal verlaufende Schwenkachse aufweist, werden die Fasern während der Bereitstellung und Zuführung nicht verdrillt, so dass dem Faserlegekopf einfach und schnell zu legende Fasern zugeführt werden können.

Der x-Schlitten, der y-Schlitten und der Faserlegekopf sind an dem Maschinengestell angeordnet. Die Faser-Bereitstellungseinheit ist vorzugsweise an dem Maschinengestell angeordnet.

Zum Zustellen des Faserlegekopfs zu dem Werkzeugtisch bzw. dem darauf angeordneten Formwerkzeug ist der Faserlegekopf vorzugsweise in der vertikalen z-Richtung linear verfahrbar. Der x-Schlitten ist zum automatischen Be- und Entladen des Werkzeugtischs vorzugsweise von einer Beladeseite bis zu einer Entladeseite linear verfahrbar. Weiterhin ist der auf dem x-Schlitten angeordnete Werkzeugtisch um die Schwenkachse bzw. z-Achse drehbar und als c-Achse ausgeführt. Vorzugsweise ist der Faserlegekopf auswechselbar.

Eine Faserlegemaschine nach Anspruch 2 gewährleistet eine effiziente Herstellung von Fasergelegen. Dadurch, dass der x-Schlitten von der Beladeseite bis zu der Entladeseite des Maschinengestells linear verfahrbar ist, kann der Werkzeugtisch automatisch be- und entladen werden. Hierzu ist der Werkzeugtisch insbesondere mit Aufnahmen versehen, die eine Formwerkzeug-Palette mit einem Formwerkzeug zur Ablage von Fasern mittels Nullpunktspannsystemen bzw. Nullpunktspannern spannen. Insbesondere kann die Faserlegemaschine hauptzeitparallel, also während des Faserlegens, mit Formwerkzeugen bzw. Formwerkzeug-Paletten mit darauf angeordneten Formwerkzeugen be- und/oder entladen werden. Ein zu belegendes Formwerkzeug steht einerseits bereits zur Beladung des Werkzeugtischs bereit, wenn ein auf dem Werkzeugtisch angeordnetes Formwerkzeug noch belegt wird. Andererseits wird ein belegtes Formwerkzeug von dem Werkzeugtisch entladen und zur weiteren Entladung aus der Faserlegemaschine bereitgehalten, wobei der Werkzeugtisch unabhängig von dem weiteren Entladen des belegten Formwerkzeugs zur Herstellung eines weiteren Fasergeleges einsatzbereit ist bzw. eingesetzt wird. Demzufolge weist die Faserlegemaschine entlang ihrer x-Achse Zonen für das Be- und Entladen an den Stirnseiten auf und dazwischen, also unterhalb der y-Achse, eine Zone für das Ablegen von Fasern. Das Maschinengestell weist ein Maschinenbett auf, das sich in der x- und y-Richtung erstreckt und an dem der x-Schlitten linear verfahrbar ist bzw. die x-Führungsschienen angeordnet sind. Die Beladeseite und die Entladeseite sind vorzugsweise an gegenüberliegenden Seiten relativ zu dem Werkzeugtisch angeordnet.

Eine Faserlegemaschine nach Anspruch 3 gewährleistet eine effiziente Herstellung von Fasergelegen. Dadurch, dass der Werkzeugtisch mehrere Spanneinheiten aufweist, können Formwerkzeug-Paletten mit darauf angeordneten Formwerkzeugen einfach und schnell zum Be- und/oder Entladen des Werkzeugtischs gespannt und gelöst werden. Die Spanneinheiten spannen die Formwerkzeug-Paletten mechanisch und sind beispielsweise als Nullpunktspanner ausgebildet. Die Spanneinheiten können elektromechanisch, hydraulisch oder pneumatisch betätigbar sein.

Eine Faserlegemaschine nach Anspruch 4 gewährleistet ein einfaches und schnelles Be- und/oder Entladen des Werkzeugtischs. Vorzugsweise sind eine erste Paletten-Handhabungseinheit an der Beladeseite und eine zweite Paletten-Handhabungseinheit an der Entladeseite des Maschinengestells angeordnet. Die mindestens eine Paletten-Handhabungseinheit ist insbesondere als Paletten-Hubeinheit ausgebildet, die in der z-Richtung ein Anheben und Absenken von Formwerkzeug-Paletten ermöglicht. Zum automatischen Beladen des Werkzeugtischs wird von der ersten Paletten-Handhabungseinheit eine Formwerkzeug-Palette mit einem zu belegenden Formwerkzeug in einer angehobenen Position bereitgehalten. Der leere Werkzeugtisch wird in der x-Richtung zu der Beladeseite und unter die bereitgehaltene Formwerkzeug-Palette verfahren. Anschließend wird die Formwerkzeug-Palette mit der ersten Paletten-Handhabungseinheit abgesenkt und die Formwerkzeug-Palette beispielsweise mittels der Spanneinheiten gespannt. Der beladene Werkzeugtisch wird nun in der x-Richtung zu dem Faserlegekopf verfahren und das auf der Formwerkzeug-Palette angeordnete Formwerkzeug mit Fasern belegt. Ist das Faserlegen abgeschlossen, wird der Werkzeugtisch in der x-Richtung zu der Entladeseite verfahren. Dort befindet sich die zweite Paletten-Handhabungseinheit in einer abgesenkten Position. Zum Entladen wird die Formwerkzeug-Palette beispielsweise mittels der Spanneinheiten von dem Werkzeugtisch gelöst. Dadurch, dass die Formwerkzeug-Palette mittels des Werkzeugtischs über die zweite Paletten-Handhabungseinheit verfahren wurde, wird die Formwerkzeug-Palette durch Überführen der zweiten Paletten-Handhabungseinheit von der abgesenkten Position in eine angehobene Position entladen. Der leere Werkzeugtisch kann nun wieder zu der Beladeseite verfahren werden, wo die erste Paletten-Handhabungseinheit eine weitere Formwerkzeug-Palette vorhält. Die zweite Paletten-Handhabungseinheit kann parallel zu dem Beladen des Werkzeugtischs entladen werden, so dass die zweite Paletten-Handhabungseinheit für das nächste Entladen des Werkzeugtischs bereitsteht.

Eine Faserlegemaschine nach Anspruch 5 gewährleistet eine einfache und effiziente Herstellung von Fasergelegen. Der Querträger gewährleistet ein einfaches Verfahren des Faserlegekopfs in der y-Richtung, ohne dass das Verfahren des Werkzeugtischs beeinträchtigt wird. Hierzu ist unterhalb des mindestens einen Querträgers insbesondere eine zugehörige Durchfahröffnung für den Werkzeugtisch ausgebildet, so dass dieser entlang der x-Richtung von der Beladeseite bis zu der Entladeseite verfahrbar ist. Der mindestens eine Querträger ist vorzugsweise an beiden Enden mit einem Maschinenbett des Maschinengestells verbunden. Hierdurch weist der mindestens eine Querträger eine hohe mechanische Steifigkeit auf, so dass auf einfache Weise hohe Faserlegegeschwindigkeiten und somit eine hohe Produktivität beim Herstellen von Fasergelegen erzielt wird.

Eine Faserlegemaschine nach Anspruch 6 gewährleistet eine einfache und effiziente Herstellung von Fasergelegen. Der y-Schlitten ist an den zwei Querträgern verfahrbar gelagert, so dass der Faserlegekopf zwischen den Querträgern angeordnet ist. Hierdurch können auf den Faserlegekopf wirkende Kräfte in das Maschinengestell abgeleitet werden, ohne dass sich das Maschinengestell verformt. Vorzugsweise sind die zwei Querträger an ihren jeweiligen Enden mit Längsstützen an einem Maschinenbett des Maschinengestells befestigt. Hierdurch wird ein einfaches und schnelles Faserlegen ermöglicht.

Eine Faserlegemaschine nach Anspruch 7 ermöglicht ein einfaches und schnelles Zustellen des Faserlegekopfs zu dem jeweiligen Formwerkzeug und insbesondere eine flexible Herstellung von dreidimensionalen Fasergelegen. Der Faserlegekopf ist mittels des z-Schlittens insbesondere mindestens 200 mm, insbesondere mindestens 400 mm, und insbesondere mindestens 600 mm in der z-Richtung verfahrbar. Zur Herstellung von dreidimensionalen Fasergelegen ist die Steuereinheit derart ausgebildet, dass der Faserlegekopf nicht ausschließlich zu dessen Zustellung in der z-Richtung verfahrbar ist, sondern auch während des Faserlegens, so dass eine dreidimensionale, also nicht ebene Werkzeugoberfläche eines Formwerkzeugs mit Fasern belegbar ist. Der Faserlegekopf ist während des Faserlegens innerhalb seines Hubs verfahrbar, insbesondere mindestens 50 mm, insbesondere mindestens 100 mm, und insbesondere mindestens 150 mm in der z-Richtung. Vorzugsweise ist der Faserlegekopf auswechselbar an dem z-Schlitten angeordnet. Hierdurch wird die Verfügbarkeit der Faserlegemaschine und damit deren Flexibilität und Produktivität erhöht. Der Faserlegekopf kann zusätzlich um eine parallel zu der x-Richtung verlaufende Schwenkachse verschwenkbar sein, so dass eine a-Achse in der Befestigung des Faserlegekopfs ausgebildet ist. Das Fasergelege kann hierdurch in der z-Richtung vergleichsweise größere Abmessungen aufweisen, also stärker gekrümmt sein.

Eine Faserlegemaschine nach Anspruch 8 gewährleistet eine schnelle und effiziente Herstellung von Fasergelegen. Der Faserlegekopf wird beim Faserlegen unidirektional in der y-Richtung bewegt. Dadurch, dass das mindestens eine Umlenkelement und das mindestens eine Faserspulenlager relativ zu dem Faserlegekopf einander gegenüberliegend angeordnet sind, sind die zu legenden Fasern in der Ausgangslage des Faserlegekopfs bzw. in der Ausgangslage des y-Schlittens für den folgenden Faserlegevorgang aus dem mindestens einen Faserspulenlager gezogen. Vorzugsweise ist das mindestens eine Umlenkelement an dem y-Schlitten angeordnet. Beispielsweise weist das mindestens eine Umlenkelement in der y-Richtung einen größeren Abstand zu dem mindestens einen Faserspulenlager auf als der Faserlegekopf. Dadurch, dass die Fasern in der Ausgangslage des Faserlegekopfs, also zu Beginn des Faserlegens, bereits aus dem mindestens einen Faserspulenlager gezogen sind, kann der Faserlegekopf während des Faserlegens schnell in der y-Richtung verfahren werden. Da der Faserlegekopf während des Faserlegens auf das mindestens eine Faserspulenlager zubewegt wird, müssen die Fasern während des Faserlegens nicht weiter aus dem mindestens einem Faserspulenlager gefördert bzw. gezogen werden. Wird der Faserlegekopf nach einem Faserlegevorgang wieder in seine Ausgangslage zurück verfahren, werden die Fasern für den nächsten Faserlegevorgang aus dem mindestens einen Faserspulenlager gezogen. Hierdurch ist zudem die Möglichkeit gegeben, Fasern möglichst gleichmäßig aus dem mindestens einen Faserspulenlager zu fördern, wobei dynamische Effekte von dem Tänzermagazin kompensiert werden. Da die Fasern während des Herausziehens nicht gleichzeitig gelegt werden müssen, ist das Herausziehen vergleichsweise problemlos. Vorzugsweise werden die Fasern oberhalb des mindestens einen Querträgers aus dem mindestens einen Faserspulenlager geführt. Das mindestens eine Faserspulenlager ist vorzugsweise in der x-Richtung neben dem mindestens einen Querträger angeordnet, so dass die Fasern in der x-Richtung aus dem mindestens einen Faserspulenlager geführt und anschließend durch mindestens ein Umlenkelement, das an einem Traggestell angeordnet ist, in die y-Richtung umgelenkt werden. Dieses mindestens eine Umlenkelement ist vorzugsweise als Umlenkrolle mit einer vertikalen Drehachse ausgebildet. Das gegenüberliegend zu dem mindestens einen Faserspulenlager, insbesondere an dem y-Schlitten, angeordnete mindestens eine Umlenkelement ist vorzugsweise als Umlenkrolle mit einer horizontalen Drehachse ausgebildet. Vorzugsweise weist die Faserlegemaschine zwei Faserspulenlager auf, die in der x-Richtung beidseitig des mindestens einen Querträgers angeordnet sind. Das Traggestell ist vorzugsweise an den Faserspulenlagern befestigt. Es können auch mehr als zwei Faserspulenlager vorgesehen sein, die dem Faserlegekopf Fasern bereitstellen.

Eine Faserlegemaschine nach Anspruch 9 gewährleistet ein einfaches und schnelles Faserlegen. Das mindestens eine Tänzermagazin gleicht Änderungen der auf die Fasern wirkenden Zugspannung aus, so dass die Zugspannung der Fasern im Wesentlichen konstant bleibt. Hierdurch werden die Fasern entlang des Faserpfads zwischen dem mindestens einen Faserspulenlager und dem Faserlegekopf stabilisiert und dynamische Krafteffekte kompensiert, so dass höhere Faserlege- und Faserschnittgeschwindigkeiten ermöglicht werden. Darüber hinaus werden Umkehrlose im Faserpfad kompensiert, die insbesondere durch Umlenkpunkte bzw. Umlenkelemente an der y-Achse und der z-Achse hervorgerufen werden.

Eine Faserlegemaschine nach Anspruch 10 gewährleistet eine flexible Herstellung von Fasergelegen. Durch die Klimatisierungseinheit kann der Innenraum des Maschinengehäuses klimatisiert werden, wodurch eine einfache und flexible Herstellung von Fasergelegen ermöglicht wird. Dadurch, dass die Gehäuseöffnungen an der Beladeseite und der Entladeseite durch Abdeckelemente verschließbar sind, wird die Klimatisierung des Innenraums durch das Verfahren des Werkzeugtischs nicht beeinträchtigt. Die Abdeckelemente sind beispielsweise als Türen oder Gliederschürzen ausgebildet. Durch die Klimatisierung gewährleistet die Faserlegemaschine optimale Verarbeitungsbedingungen. Dies ist insbesondere dann vorteilhaft, wenn die Fasern bzw. imprägnierten Fasen hydrophil sind und/oder sich ihre Verarbeitungseigenschaften mit ihrer Temperatur ändern. Durch die Klimatisierung wird insbesondere vermieden, dass eine gesamte Fertigungshalle klimatisiert werden muss.

Der Erfindung liegt ferner die Aufgabe zugrunde, eine Faserlegeanlage zu schaffen, die auf einfache, flexible und effiziente Weise die Herstellung von Fasergelegen ermöglicht.

Diese Aufgabe wird durch eine Faserlegeanlage mit den Merkmalen des Anspruchs 11 gelöst. Durch die Fördereinrichtung können die mindestens zwei Faserlegemaschinen automatisch beladen und entladen werden. Hierzu sind die Formwerkzeuge insbesondere auf Formwerkzeug-Paletten angeordnet. Die Handhabung bzw. Förderung der Formwerkzeuge bzw. Formwerkzeug-Paletten außerhalb der Faserlegemaschinen erfolgt beispielsweise auf Rollfördersystemen oder mittels Gantrys. Je nach Anwendungsfall ist eine Kombination dieser Systeme mit Industrierobotern möglich. Die Formwerkzeuge bzw. Formwerkzeug-Paletten sind insbesondere auf einer Führung verfahrbar. Die Faserlegemaschinen sind in Reihe zueinander und/oder parallel zueinander angeordnet. Die Führung führt zu der Beladeseite und/oder der Entladeseite jeder der Faserlegemaschinen. Die erfindungsgemäße Faserlegeanlage weist eine hohe Produktivität bei der Herstellung von Fasergelegen auf.

Der Erfindung liegt ferner die Aufgabe zugrunde, ein Verfahren zu schaffen, das auf einfache, flexible und effiziente Weise die Herstellung von Fasergelegen ermöglicht.
Diese Aufgabe wird durch ein Verfahren mit den Merkmalen des Anspruchs 12 gelöst. Die Vorteile des erfindungsgemäßen Verfahrens entsprechen den Vorteilen der erfindungsgemäßen Faserlegemaschine bzw. der erfindungsgemäßen Faserlegeanlage. Das erfindungsgemäße Verfahren beinhaltet die Merkmale der Ansprüche 1 bis 11. Durch das automatische Be- und Entladen des Werkzeugtischs wird die Herstellung von Fasergelegen mit einer hohen Produktivität ermöglicht. Die Faserlegemaschine ist insbesondere vierachsig ausgebildet.

Ein Verfahren nach Anspruch 13 gewährleistet eine hohe Produktivität. Dadurch, dass das automatische Be- und Entladen des Werkzeugtischs an unterschiedlichen Seiten der Faserlegemaschine erfolgt, kann bereits ein zu belegendes Formwerkzeug bereitgestellt werden, während das fertig belegte Formwerkzeug entladen wird. Hierdurch wird eine geringe Nebenzeit für das Be- und Entladen erzielt.
Ein Verfahren nach Anspruch 14 gewährleistet eine hohe Produktivität. Dadurch, dass das automatische Beladen und/oder das automatische Entladen der Faserlegemaschine zeitlich parallel zum Faserlegen erfolgt, wird die Nebenzeit reduziert. Eine erste Handhabungseinheit, die an der Beladeseite der Faserlegemaschine angeordnet ist, wird beispielsweise mittels einer Fördereinrichtung mit einem zu belegenden Formwerkzeug beladen. Das Formwerkzeug ist insbesondere auf einer Formwerkzeug-Palette angeordnet. Dieses Beladen erfolgt hauptzeitparallel zu dem Legen von Fasern auf ein weiteres Formwerkzeug, das auf dem Werkzeugtisch angeordnet ist und/oder parallel zum Entladen des Werkzeugtischs. Nach Beendigung des Faserlegevorgangs wird das mit Fasern belegte Formwerkzeug zu einer zweiten Handhabungseinheit verfahren, die an der Entladeseite der Faserlegemaschine angeordnet ist. Das belegte Formwerkzeug wird von dem Werkzeugtisch mittels der zweiten Handhabungseinheit entladen. Anschließend wird der Werkzeugtisch zu der Beladeseite verfahren, wo dieser mittels der ersten Handhabungseinheit mit dem bereitgestellten Formwerkzeug beladen wird. Anschließend wird der Werkzeugtisch wieder zu dem Faserlegekopf verfahren, wo das neue Formwerkzeug mit Fasern belegt wird. Das von der zweiten Handhabungseinheit gehaltene und belegte Formwerkzeug wird während des Beladens des Werkzeugtischs und/oder während des Legens von Fasern auf das neue Formwerkzeug aus der Faserlegemaschine entladen. Das Entladen erfolgt somit zeitlich parallel zum Beladen des Werkzeugtischs und/oder hauptzeitparallel zum Faserlegen. Das Entladen aus der Faserlegemaschine erfolgt beispielsweise mittels der Fördereinrichtung. Die Formwerkzeuge sind insbesondere auf Formwerkzeug-Paletten angeordnet.

Ein Verfahren nach Anspruch 15 gewährleistet ein einfaches und schnelles Be- und Entladen des Werkzeugtischs. Durch die Spanneinheiten können Formwerkzeug-Paletten mit unterschiedlichen Formwerkzeugen einfach, genau und schnell gespannt und gelöst werden.

Ein Verfahren nach Anspruch 16 gewährleistet ein einfaches und schnelles Be- und Entladen des Werkzeugtischs. Dadurch, dass der Werkzeugtisch ausschließlich in einer horizontalen Richtung, insbesondere in einer horizontalen x-Richtung linear verfahrbar ist, ist das Verfahren und Positionieren des Werkzeugtischs bzw. des darauf angeordneten Formwerkzeugs einfach und schnell möglich. Hierdurch wird die Produktivität der Faserlegemaschine erhöht.

Weitere Merkmale, Vorteile und Einzelheiten der Erfindung ergeben sich aus der nachfolgenden Beschreibung mehrere Ausführungsbeispiele. Es zeigen:
- Fig. 1: eine schematische Darstellung einer Faserlegeanlage gemäß einem ersten Ausführungsbeispiel mit mehreren parallel zueinander angeordneten Faserlegemaschinen zur Herstellung von Fasergelegen,
- Fig. 2: eine perspektivische Ansicht einer Faserlegemaschine der in Fig. 1 dargestellten Faserlegeanlage,
- Fig. 3: eine Draufsicht auf die Faserlegemaschine in Fig. 2,
- Fig. 4: eine perspektivische Schnittdarstellung durch die Faserlegemaschine entlang der Schnittlinie IV-IV in Fig. 3, und
- Fig. 5: eine schematische Darstellung einer Faserlegeanlage gemäß einem zweiten Ausführungsbeispiel mit in Reihe zueinander angeordneten Faserlegemaschinen zur Herstellung von Fasergelegen.

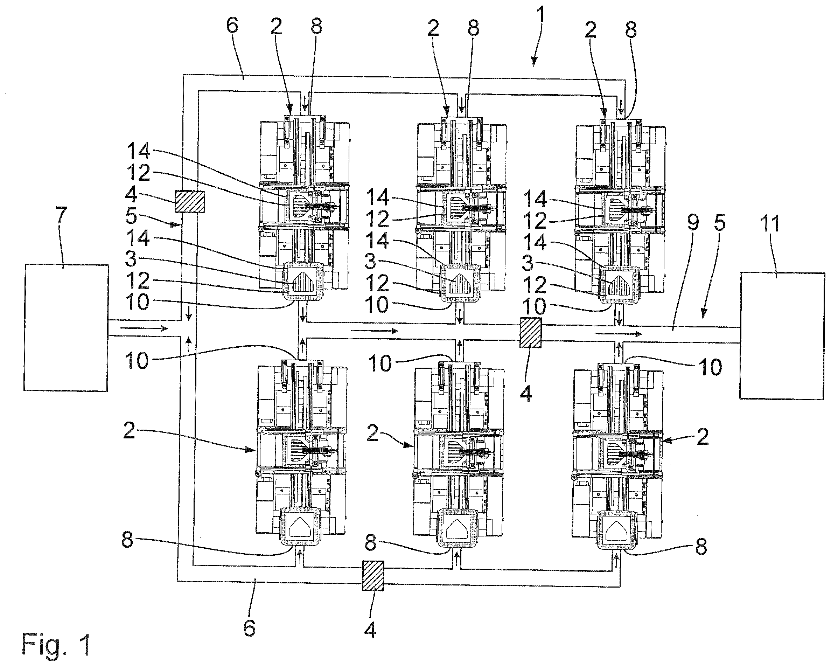

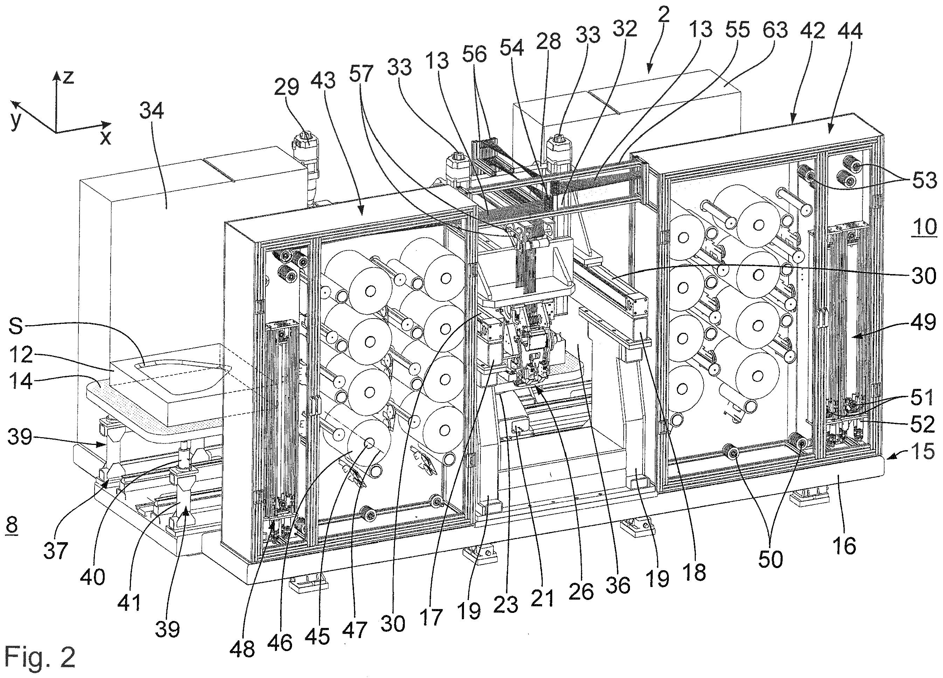

Nachfolgend ist anhand der Fig. 1 bis 4 ein erstes Ausführungsbeispiel der Erfindung beschrieben. Eine Faserlegeanlage 1 weist mehrere Faserlegemaschinen 2 zur Herstellung von Fasergelegen 3 auf. Die Faserlegemaschinen 2 sind baugleich. In Fig. 1 weist die Faserlegeanlage 1 beispielsweise sechs baugleiche Faserlegemaschinen 2 auf, die in zwei Gruppen angeordnet sind. Jede Gruppe weist drei Faserlegemaschinen 2 auf, die parallel zueinander angeordnet sind.

Zum automatischen Be- und Entladen der Faserlegemaschinen 2 weist die Faserlegeanlage 1 eine Fördereinrichtung 4, 5 auf. Die Fördereinrichtung weist beispielsweise mehrere Förderschlitten 4 auf, die auf einer Führung 5 verfahrbar sind. Die Führung 5 weist einen Beladeabschnitt 6 auf, der von einer Aufnahmestelle 7 bis zu einer jeweiligen Beladeseite 8 der Faserlegemaschinen 2 verläuft. Auf dem Beladeabschnitt 6 ist mindestens ein Förderschlitten 4 verfahrbar angeordnet. Die Führung 5 weist weiterhin einen Entladeabschnitt 9 auf, der von einer jeweiligen Entladeseite 10 der Faserlegemaschinen 2 bis zu einer Ablegestelle 11 verläuft. Auf dem Entladeabschnitt 9 ist mindestens ein Förderschlitten 4 verfahrbar angeordnet.

Mittels der Fördereinrichtung 4, 5 sind unbelegte Formwerkzeuge 12, also mit Fasern 13 zu belegende Formwerkzeuge 12, von der Aufnahmestelle 7 bis zu den Beladeseiten 8 verfahrbar und mit Fasern 13 belegte Formwerkzeuge 12 von den Entladeseiten 10 zu der Ablegestelle 11 verfahrbar. Die Formwerkzeuge 12 sind auf Formwerkzeug-Paletten 14 angeordnet.
Die Faserlegemaschinen 2 sind baugleich, so dass nachfolgend lediglich eine der Faserlegemaschinen 2 beschrieben ist. Die Faserlegemaschine 2 weist ein Maschinengestell 15 mit einem Maschinenbett 16 und daran angeordneten Querträgern 17, 18 auf. Das Maschinenbett 16 erstreckt sich im Wesentlichen in einer horizontalen x-Richtung und einer senkrecht dazu verlaufenden horizontalen y-Richtung. Die Querträger 17, 18 verlaufen parallel zu der y-Richtung und sind in der x-Richtung beabstandet auf dem Maschinenbett 16 angeordnet. Die Querträger 17, 18 sind jeweils an beiden Enden mittels Längsstützen 19 in einer z-Richtung oberhalb des Maschinenbetts 16 angeordnet. Die z-Richtung verläuft senkrecht zu der x- und der y-Richtung, so dass die x-, y- und z-Richtung ein kartesisches Koordinatensystem bilden.

An dem Maschinenbett 16 sind zwei x-Führungsschienen 20 angeordnet, die sich in der x-Richtung erstrecken und in der y-Richtung zueinander beabstandet sind. An den x-Führungsschienen 20 ist ein x-Schlitten 21 gelagert, der mittels eines x-Antriebsmotors 22 entlang der x-Richtung zwischen der Beladeseite 8 und der Entladeseite 10 verfahrbar ist. Hierzu erstrecken sich die x-Führungsschienen 20 in der x-Richtung entlang des gesamten Maschinenbetts 16. An dem x-Schlitten 21 ist ein Werkzeugtisch 23 angeordnet, der mittels eines c-Antriebsmotors 24 um eine vertikale Schwenkachse 25 verschwenkbar ist. Die vertikale Schwenkachse 25 wird auch als c-Achse bezeichnet. Die c-Achse 25 verläuft parallel zu der z-Richtung. Der Werkzeugtisch 23 ist mittels des x-Schlittens 21 ausschließlich in der x-Richtung linear verfahrbar.

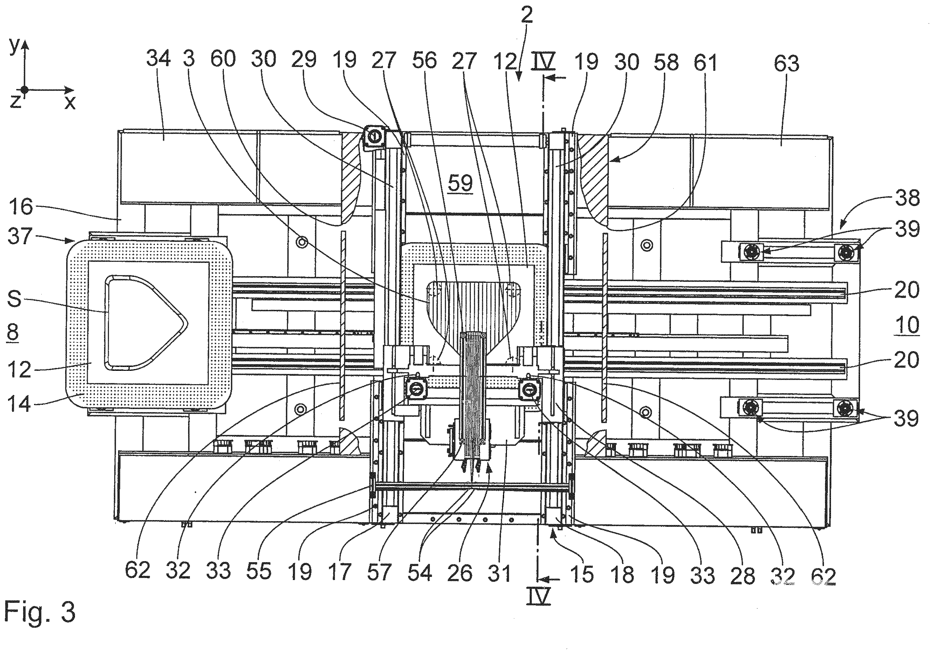

Der Werkzeugtisch 23 dient zum Positionieren des jeweiligen Formwerkzeugs 12 relativ zu einem Faserlegekopf 26. Zum mechanischen Spannen und Lösen der Formwerkzeug-Paletten 14 mit dem jeweiligen Formwerkzeug 12 weist der Werkzeugtisch 23 mehrere Spanneinheiten 27 auf. Die Spanneinheiten 27 sind in Fig. 3 schematisch dargestellt. Die Spanneinheiten 27 sind grundsätzlich bekannt und beispielsweise als Nullpunktspanner ausgebildet. Die Spanneinheiten 27 sind elektromechanisch, hydraulisch oder pneumatisch betätigbar.

Zum Legen von Fasern 13 auf eine zweidimensionale oder dreidimensionale Werkzeugoberfläche S des jeweiligen Formwerkzeugs 12 ist der Faserlegekopf 26 in der z-Richtung oberhalb des Werkzeugtischs 23 positionierbar. Der Faserlegekopf 26 ist entlang der y-Richtung und entlang der z-Richtung verfahrbar. Hierzu ist an den Querträgern 17, 18 ein y-Schlitten 28 gelagert, der entlang der y-Richtung mittels eines y-Antriebsmotors 29 linear verfahrbar ist. Der y-Schlitten 28 ist an y-Führungsschienen 30 gelagert, die an einer Oberseite der Querträger 17, 18 angeordnet sind. Der y-Schlitten 28 erstreckt sich zwischen den Querträgern 17, 18. Zum Verfahren des Faserlegekopfs 26 in der z-Richtung ist an dem y-Schlitten 28 ein z-Schlitten 31 angeordnet. Der z-Schlitten 31 ist an z-Führungsschienen 32 gelagert und mittels z-Antriebsmotoren 33 entlang der z-Richtung verfahrbar. Die z-Führungsschienen 32 verlaufen parallel zu der z-Richtung und sind in der x-Richtung zueinander beabstandet.

Der Faserlegekopf 26 ist an dem z-Schlitten 31 angeordnet. Vorzugsweise ist der Faserlegekopf 26 auswechselbar befestigt. Der Faserlegekopf 26 ist ausschließlich in y-Richtung linear verfahrbar. Ein Verschwenken des Faserlegekopfs 26 an dem z-Schlitten 31 ist nicht möglich. Alternativ kann der Faserlegekopf 26 um eine parallel zu der x-Richtung verlaufende Schwenkachse verschwenkbar sein, also eine a-Achse ausbilden. Hierdurch können vergleichsweise stärker gekrümmte dreidimensionale Fasergelege 3 hergestellt werden.

Der Faserlegekopf 26 ist entlang der z-Richtung mittels des z-Schlittens 31 um mindestens 200 mm, insbesondere um mindestens 400 mm, und um mindestens 600 mm linear verfahrbar. Zur Herstellung von dreidimensionalen Fasergelegen 3 ist eine Steuereinheit 34 der Faserlegemaschine 2 derart ausgebildet, dass der Faserlegekopf 26 während des Legens von Fasern 13 mittels des z-Schlittens 31 über seinen Hub um mindestens 50 mm, insbesondere um mindestens 100 mm, und insbesondere um mindestens 150 mm linear verfahrbar ist.

Zum Verfahren des Werkzeugtischs 23 entlang der x-Richtung sind unterhalb der Querträger 17, 18 und zwischen den jeweils zugehörigen Längsstützen 19 Durchfahröffnungen 35, 36 für den Werkzeugtisch 23 ausgebildet. Zum automatischen Beladen des Werkzeugtischs 23 mit Formwerkzeug-Paletten 14 ist an der Beladeseite 8 eine erste Paletten-Handhabungseinheit 37 angeordnet, wohingegen zum automatischen Entladen von Formwerkzeug-Paletten 14 von dem Werkzeugtisch 23 an der Entladeseite 10 eine zweite Paletten-Handhabungseinheit 38 angeordnet ist. Die Handhabungseinheiten 37, 38 sind entlang der x-Richtung endseitig an dem Maschinenbett 16 befestigt. Die Paletten-Handhabungseinheiten 37, 38 sind als Hubeinheiten ausgebildet, die zum Anheben und Absenken von Formwerkzeug-Paletten 14 dienen. Hierzu weisen die Paletten-Handhabungseinheiten 37, 38 mindestens drei, insbesondere mindestens vier Hubelemente 39 auf. Die Hubelemente 39 weisen einen Kolben 40 auf, der in einem zugehörigen Zylinder 41 entlang der z-Richtung verlagerbar ist. Die Hubelemente 39 sind elektromechanisch, pneumatisch oder hydraulisch betätigbar. Insbesondere werden die zu der jeweiligen Paletten-Handhabungseinheit 37, 38 gehörigen Hubelemente 39 mittels der Steuereinheit 34 synchron betätigt, um eine Formwerkzeug-Palette 14 anzuheben oder abzusenken.

Die Faserlegemaschine 2 weist zum Bereitstellen der zu legenden Fasern 13 eine Faser-Bereitstellungseinheit 42 auf. Die Faser-Bereitstellungseinheit 41 weist zwei Faserspulenlager 43, 44 auf, wobei ein erstes Faserspulenlager 43 in der x-Richtung neben dem ersten Querträger 17 und ein zweites Faserspulenlager 44 neben dem zweiten Querträger 18 angeordnet ist. Die Faserspulenlager 43, 44 sind in der y-Richtung endseitig an dem Maschinenbett 16 befestigt. Die Faserspulenlager 43, 44 weisen jeweils mehrere Faserspulenhalter 45 für Faserspulen 46 auf. Die Faserspulen 46 sind an einem jeweiligen Faserspulenhalter 45 angeordnet und um eine jeweilige horizontale Drehachse 47 drehbar gelagert. Die jeweilige horizontale Drehachse 47 verläuft parallel zu der y-Richtung. Die Fasern 13 sind über Führungselemente 50 in Form von Führungsrollen einem jeweiligen Tänzermagazin 48, 49 zuführbar, das zur Kompensation von Änderungen einer auf die Fasern 13 wirkenden Zugspannung dient. Das jeweilige Tänzermagazin 48, 49 weist Umlenkelemente 51 in Form von Umlenkrollen auf, die entlang der z-Richtung verlagerbar sind und mittels Gewichten die Fasern 13 vorspannen. Die Umlenkelemente 51 werden auch als Tänzer bezeichnet. Durch die Verlagerung der Umlenkelemente 51 sind dynamische Effekte kompensierbar, die einerseits durch die Trägheit der Faserspulen 46 hervorgerufen sind und andererseits durch ein ungleichmäßiges Fördern der Fasern 13 im Falle des Schneidens einzelner Fasern 13 während des Ablegens von Fasern 13 bedingt sind. Die Fasern 13 sind über Führungselemente 53 in Form von Führungsrollen umlenkbar und aus dem jeweiligen Faserspulenlager 43, 44 führbar. Die Position der Umlenkelemente 51 wird im Betrieb der Tänzermagazine 48, 49 geregelt. Hierzu dienen Sensoren 52, die die Auslenkung in z-Richtung der Umlenkelemente 51 ermitteln. Die Auslenkung in z-Richtung wird um eine Sollposition geregelt, indem die Faserspulenhalter 45 mit einer regelbaren Bremse ausgestattet sind.

Die Fasern 13 treten aus den Faserspulenlagern 43, 44 in der x-Richtung aus und werden durch vertikal angeordnete Umlenkelemente 54, die eine vertikale Umlenkachse ausbilden, in die y-Richtung umgelenkt. Die Umlenkelemente 54 sind als Umlenkrollen ausgebildet. Die Umlenkelemente 54 sind an einem Traggestell 55 gelagert, das zwischen den Faserspulenlagern 43, 44 befestigt ist. An einer dem Faserlegekopf 26 und den Faserspulenlagern 43, 44 abgewandten Seite des y-Schlittens 28 sind horizontale Umlenkelemente 46 in Form von Umlenkrollen angeordnet, die die Fasern 13 zunächst von der y-Richtung in die z-Richtung und anschließend von der z-Richtung wieder in die y-Richtung umlenken. Die Umlenkelemente 56 bilden horizontale Umlenkachsen aus. Zwischen dem y-Schlitten 28 und den Faserspulenlagern 43, 44 sind oberhalb des z-Schlittens 31 weitere horizontale Umlenkelemente 57 angeordnet. Die Umlenkelemente 57 bilden horizontale Umlenkachsen aus und lenken die Fasern 13 von der y-Richtung in die z-Richtung zu dem Faserlegekopf 26 um. Die Umlenkelemente 57 sind als Umlenkrollen ausgebildet. Der Faserlegekopf 26 ist im Aufbau bekannt.

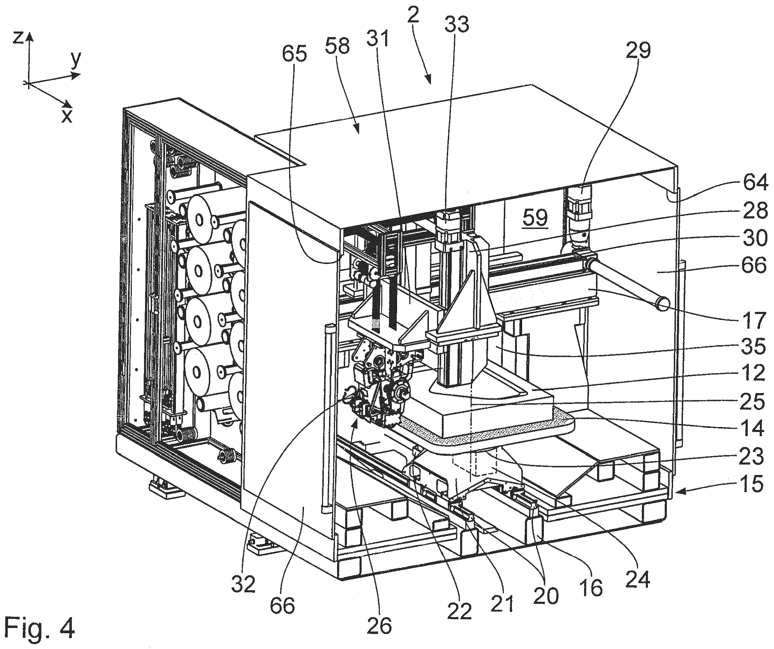

Die Faserlegemaschine 2 weist ein Maschinengehäuse 58 auf, das lediglich in den Fig. 3 und 4 dargestellt ist. Das Maschinengehäuse 58 begrenzt einen Innenraum 59, in dem die Längsstützen 19 mit den Querträgern 17, 18, der y-Schlitten 28, der z-Schlitten 31 und der Faserlegekopf 26 angeordnet sind. Das Maschinengehäuse 58 weist zur Beladeseite 8 hin eine erste Gehäuseöffnung 60 und zur Entladeseite 10 hin eine zweite Gehäuseöffnung 61 auf, die durch jeweilige Abdeckelemente 62 dicht verschlossen und geöffnet werden können. Die Gehäuseöffnungen 60, 61 und die zugehörigen Abdeckelemente 62 sind in Fig. 3 lediglich skizziert. Die Abdeckelemente 62 sind beispielsweise als Türen oder Gliederschürzen ausgebildet.

Zur Klimatisierung des Innenraums 59 weist die Faserlegemaschine 2 eine Klimatisierungseinheit 63 auf, die auf dem Maschinenbett 16 angeordnet ist. Zum Betreten des Innenraums 59 sind zwei weitere Gehäuseöffnungen 64, 65 in dem Maschinengehäuse 58 ausgebildet, die zwischen den jeweils benachbarten Längsstützen 19 in den Innenraum 59 münden. Die Gehäuseöffnungen 64, 65 sind mittels Türen 66 verschließbar.

Die Betriebsweise der Faserlegeanlage 1 und der Faserlegemaschine 2 ist wie folgt:
Die Faserlegemaschinen 2 werden mittels der Fördereinrichtung 4, 5 automatisch mit Formwerkzeug-Paletten 14 beladen, auf denen zu belegende Formwerkzeuge 12 angeordnet sind. Hierzu verfährt der mindestens eine Förderschlitten 4 von der Aufnahmestelle 7 auf dem Beladeabschnitt 6 der Führung 5 bis zu der jeweiligen Beladeseite 8 der Faserlegemaschinen 2.

Das Beladen erfolgt derart, dass die Fördereinrichtung 4, 5 die Formwerkzeug-Palette 14 der ersten Paletten-Handhabungseinheit 37 zuführt. Die erste Paletten-Handhabungseinheit 37 befindet sich vorzugsweise in einer angehobenen Position. Sofern sich die erste Paletten-Handhabungseinheit 37 nicht in einer angehobenen Position befindet, so wird diese vor oder nach dem Beladen in eine angehobene Position überführt. Das Beladen der jeweiligen Faserlegemaschine 2 erfolgt zeitlich parallel zum Legen von Fasern 13 und/oder zum Entladen des Werkzeugtischs 23.

Während die erste Paletten-Handhabungseinheit 37 an der Beladeseite 8 ein zu belegendes Formwerkzeug 12 bereitstellt, wird mittels des Faserlegekopfes 6 ein Fasergelege 3 hergestellt. Hierzu ist eine Formwerkzeug-Palette 14 mit einem darauf angeordneten Formwerkzeug 12 auf dem Werkzeugtisch 23 mittels der Spanneinheiten 27 gespannt. Der Werkzeugtisch 23 wird während dem Faserlegen mittels des x-Schlittens 21 entlang der x-Richtung linear verfahren und zum Erzielen einer gewünschten Faserorientierung mittels des c-Antriebsmotors 24 um die Schwenkachse 25 verschwenkt. Weiterhin verfährt der Faserlegekopf 26 beim Faserlegen mittels des y-Schlittens 28 entlang der y-Richtung und mittels des z-Schlittens 31 entlang der z-Richtung. Durch Verfahren des Faserlegekopfes 26 in der z-Richtung ist insbesondere ein dreidimensionales Fasergelege 3 herstellbar.

Nach der Fertigstellung des Fasergeleges 3 wird der x-Schlitten 21 in der x-Richtung zu der Entladeseite 10 verfahren. Dort befindet sich die zweite Paletten-Handhabungseinheit 38 in einer abgesenkten Position. Zum automatischen Entladen der Formwerkzeug-Palette 14 wird diese mittels der Spanneinheiten 27 von dem Werkzeugtisch 23 gelöst. Anschließend werden die Hubelemente 39 der zweiten Paletten-Handhabungseinheit 38 von der abgesenkten in die angehobene Position überführt, so dass die Formwerkzeug-Palette 14 mit dem fertig belegten Formwerkzeug 12 automatisch von dem Werkzeugtisch 23 entladen wird.

Anschließend verfährt der x-Schlitten 21 von der Entladeseite 10 zu der Beladeseite 8, wo die erste Paletten-Handhabungseinheit 37 in der angehobenen Position die nächste Formwerkzeug-Palette 14 bereithält. Befindet sich der Werkzeugtisch 23 unterhalb der Formwerkzeug-Palette 14, werden die Hubelemente 39 der ersten Paletten-Handhabungseinheit 37 von der angehobenen in die abgesenkte Position überführt, wodurch die Formwerkzeug-Palette 14 auf dem Werkzeugtisch 23 angeordnet wird. Die Formwerkzeug-Palette 14 wird anschließend mittels der Spanneinheiten 27 auf dem Werkzeugtisch 23 gespannt. Der Werkzeugtisch 23 wird nun für den nächsten Faserlegevorgang in der x-Richtung zu dem Faserlegekopf 26 verfahren, so dass dieser mit dem neuen Faserlegevorgang beginnen kann. Die Hubelemente 39 der ersten Paletten-Handhabungseinheit 37 werden für ein neues Beladen wieder in die angehobene Position überführt.

Das automatische Entladen der Faselegemaschinen 2 erfolgt mittels der Fördereinrichtung 4, 5 die von der jeweiligen Entladeseite 10 zu der Ablegestelle 11 führt. Das Entladen der jeweiligen Faserlegemaschine 2 erfolgt zeitlich parallel zu dem Beladen des Werkzeugtischs 23 mit einer Formwerkzeug-Palette 14 und einem darauf angeordneten und zu belegenden Formwerkzeug 12 und/oder zum Belegen des Formwerkzeugs 12 mit Fasern 13. Zum Entladen übernimmt der Förderschlitten 4 die Formwerkzeug-Palette 14 und das darauf angeordnete Formwerkzeug 12 von der zweiten Paletten-Handhabungseinheit 38 und verfährt von der jeweiligen Entladeseite 10 auf dem Entladeabschnitt 9 der Führung 5 zu der Ablegestelle 11. Die Hubelemente 39 der zweiten Paletten-Handhabungseinheit 38 werden nach dem Entladen in die abgesenkte Position überführt, so dass der Werkzeugtisch 23 wieder entladen werden kann.

Die Gehäuseöffnungen 60, 61 des klimatisierten Maschinengehäuses 58 sind überwiegend mittels der Abdeckelemente 62 verschlossen und werden nur geöffnet, wenn der Werkzeugtisch 23 von der Beladeseite 8 zu dem Faserlegekopf 26 oder von dem Faserlegekopf 26 zu der Entladeseite 10 oder von der Entladeseite 10 zu der Beladeseite 8 verfahren wird.

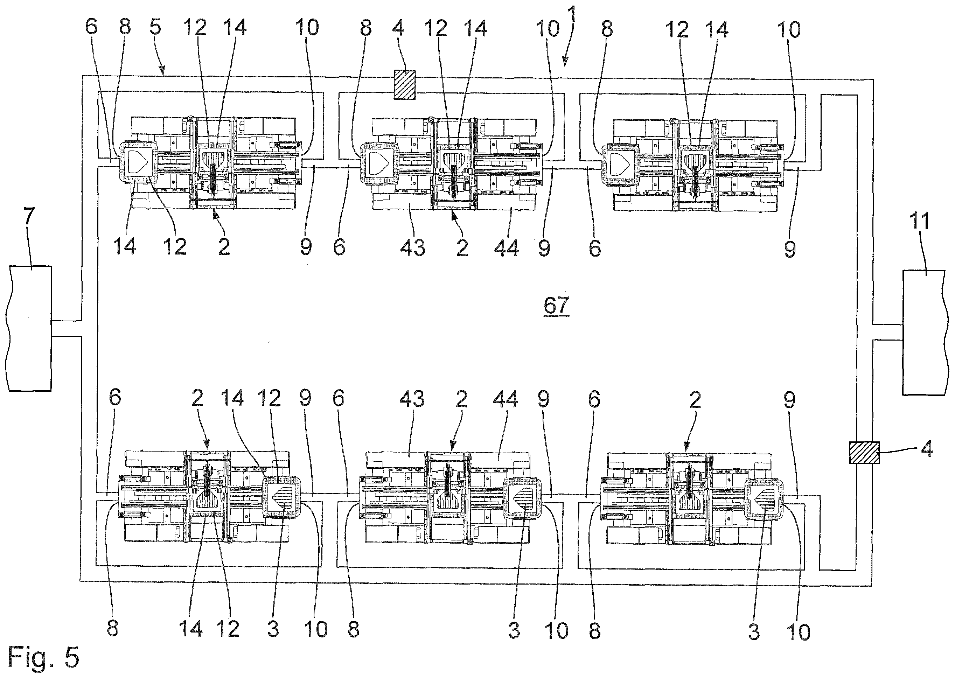

Das Legen der Fasern 13 erfolgt unidirektional, wenn der Faserlegekopf 26 in der y-Richtung zu den Faserspulenlagern 43, 44 hin verfahren wird. Bei diesem Verfahrvorgang verkürzt sich der Abstand zwischen den vertikalen Umlenkelementen 54 und den horizontalen Umlenkelementen 56, so dass während des Faserlegevorgangs keine Fasern 13 aus den Faserspulenlagern 43, 44 gezogen werden müssen. Hierdurch kann das Faserlegen vergleichsweise schnell erfolgen. Bei dem Rückwärtsverfahren des Faserlegekopfes 26 von den Faserspulenlagern 43, 44 weg, werden dann die Fasern 13 für den nächsten Faserlegevorgang aus den Faserspulenlagern 43, 44 gezogen. Änderungen in der Zugspannung der Fasern 13 werden mittels der Tänzermagazine 48, 49 ausgeglichen.
Nachfolgend ist anhand von Fig. 5 ein zweites Ausführungsbeispiel der Offenbarung beschrieben. Im Unterschied zu dem ersten Ausführungsbeispiel sind die Faserlegemaschinen 2 in zwei Gruppen in Reihe zueinander angeordnet. Die Führung 5 ist derart ausgebildet, dass die Förderschlitten 4 über einen jeweiligen Beladeabschnitt 6 und einen jeweiligen Entladeabschnitt 9 zu der Beladeseite 8 und der Entladeseite 10 jeder der Faserlegemaschinen 2 verfahrbar sind. Die Faserspulenlager 43, 44 der jeweiligen Faserlegemaschine 2 sind zu einem Zwischenraum 67 hin angeordnet. Der Zwischenraum 67 wird durch die zwei Reihen von Faserlegemaschinen 2 gebildet. In dem Zwischenraum 67 ist beispielsweise ein Vorratslager mit Faserspulen 46 angeordnet, um die Faserspulenlager 43, 44 neu zu bestücken. Hinsichtlich des weiteren Aufbaus und der weiteren Funktionsweise der Faserlegeanlage 1 und der Faserlegemaschinen 2 wird auf das vorangegangene Ausführungsbeispiel verwiesen.

Allgemein gilt Folgendes: Die Faserlegemaschinen 2 ermöglichen das Legen von Faserstacks aus Tow-Preg-Material und/oder Slit-Tow-Material und/oder trockenen Fasern 13, die mit einem Binder versehen sein können. Die Fasern 13 sind vorzugsweise Kohlenstofffasern und/oder Glasfasern. Die Fasergelege 3 können mit einer beliebigen Faserorientierung und/oder Kontur hergestellt werden. Die Faserlegemaschinen 2 funktionieren autark. Zum Be- und Entladen der Faserlegemaschinen 2 kann die Faserlegeanlage 1 eine übergeordnete Steuereinrichtung aufweisen. Die Faserlegemaschinen 2 sind zur Erzielung einer hohen Produktivität insbesondere in eine Taktstraße eingebunden. Die jeweilige Faserlegemaschine 2 ist vierachsig ausgebildet. Ist der Faserlegekopf 26 um eine zusätzliche a-Achse verschwenkbar, ist die jeweilige Faserlegemaschine 2 fünfachsig ausgebildet. Mit der jeweiligen Faserlegemaschine 2 können sowohl zweidimensionale als auch dreidimensionale Fasergelege 3 hergestellt werden. Der Faserlegekopf 26 ist in zwei Achsen linear verfahrbar. Insbesondere ist der Faserlegekopf 26 ausschließlich in zwei Achsen linear verfahrbar, nämlich in einer horizontalen y-Achse und einer vertikalen z-Achse. Der Werkzeugtisch 23 ist in einer Achse linear verfahrbar und um eine Schwenkachse 25 verschwenkbar. Insbesondere ist der Werkzeugtisch 23 ausschließlich in einer x-Achse linear verfahrbar und um eine vertikale c-Achse verschwenkbar. Diese Achskombination erlaubt eine einfache, flexible und effiziente Herstellung von zweidimensionalen und dreidimensionalen Fasergelegen 3 mit beliebiger Faserorientierung und/oder Kontur.

Der Faserlegekopf 26 ist mehrspurig ausgebildet und beinhaltet die üblichen Funktionen, wie beispielsweise Schneiden der Fasern 13 in Bewegung, Klemmen und Antreiben der Fasern 13, wobei jede Funktion einzeln für die Fasern 13 zur Verfügung steht. Der Faserlegekopf 26 ist zu Wartungszwecken auswechselbar. Das Beladen der Faserlegemaschine 2 und/oder des Werkzeugtischs 23 erfolgt automatisch. Hierzu sind die Fördereinrichtung 4, 5 und die Paletten-Handhabungseinheit 37 vorgesehen. Entsprechend erfolgt das Entladen des Werkzeugtischs 23 und/oder der Faserlegemaschine 2 automatisch. Hierzu sind die Paletten-Handhabungseinheit 38 und die Fördereinrichtung 4, 5 vorgesehen. Die Fördereinrichtung kann auch derart ausgebildet sein, dass mittels der Führung selbst die Formwerkzeuge 12 bzw. die Formwerkzeug-Paletten 14 verfahrbar sind. Hierzu bildet die Führung beispielsweise einen Rollenförderer oder Bandförderer aus. Förderschlitten sind dann nicht erforderlich. Die Paletten-Handhabungseinheiten 37, 38 sind beispielsweise ein Palettenwechsler. Die Faserlegemaschine 2 ist zum Be- und Entladen von zwei gegenüberliegenden Seiten zugänglich. Insbesondere können Formwerkzeug-Paletten 14 durch die Faserlegemaschine 2 durchgeladen werden. Durch das Durchladen ist die Faserlegemaschine 2 geeignet, in Taktstraßen integriert zu werden. Mit der Faserlegemaschine 2 können beispielsweise Fasergelege 3 mit einer Größe von 1500 mm x 1500 mm x 100 mm hergestellt werden. Derartige Fasergelege 3 werden beispielsweise in der Automobilindustrie eingesetzt.

## Patentansprüche

1. Faserlegemaschine zur Herstellung von Fasergelegen mit
- einem Maschinengestell (15),
- einem x-Schlitten (21), der in einer horizontalen x-Richtung linear verfahrbar ist,
- einem Werkzeugtisch (23) zum Positionieren eines Formwerkzeugs (12), der an dem x-Schlitten (21) angeordnet und um eine vertikal verlaufende Schwenkachse (25) verschwenkbar ist,
- einem Faserlegekopf (26) zum Legen von Fasern (13) auf ein Formwerkzeug (12), der in einer vertikalen z-Richtung oberhalb des Werkzeugtischs (23) angeordnet ist,
- einer Faser-Bereitstellungseinheit (42) zum Bereitstellen der von dem Faserlegekopf (26) zu legenden Fasern (13),
wobei der Faserlegekopf (26) mittels eines y-Schlittens (28) in einer horizontalen und quer zu der x-Richtung verlaufenden y-Richtung linear verfahrbar ist, wobei der Faserlegekopf (26) und der y-Schlitten (28) an dem Maschinengestell (15) angeordnet sind, **dadurch gekennzeichnet,**
**dass** das Maschinengestell (15) ein Maschinenbett (16) aufweist, das sich in der x- und y-Richtung erstreckt und an dem der x-Schlitten (21) linear verfahrbar ist bzw. x-Führungsschienen (20) angeordnet sind.

2. Faserlegemaschine nach Anspruch 1, **dadurch gekennzeichnet,**
**dass** der x-Schlitten (21) an x-Führungsschienen (20) verfahrbar ist, die von einer Beladeseite (8) des Maschinengestells (15) bis zu einer Entladeseite (10) des Maschinengestells (15) verlaufen.

3. Faserlegemaschine nach Anspruch 1 oder 2, **dadurch gekennzeichnet,**
**dass** der Werkzeugtisch (23) mehrere Spanneinheiten (27) zum mechanischen Spannen und Lösen von Formwerkzeug-Paletten (14) aufweist.

4. Faserlegemaschine nach einem der Ansprüche 1 bis 3, **gekennzeichnet durch** mindestens eine Paletten-Handhabungseinheit (37, 38) zum Beladen des Werkzeugtischs (23) mit einer Formwerkzeug-Palette (14) und/oder zum Entladen einer Formwerkzeug-Palette (14) von dem Werkzeugtisch (23), die insbesondere an der Beladeseite (8) und/oder der Entladeseite (10) des Maschinengestells (15) angeordnet ist.

5. Faserlegemaschine nach einem der Ansprüche 1 bis 4, **dadurch gekennzeichnet,**
**dass** das Maschinengestell (15) mindestens einen in der y-Richtung verlaufenden Querträger (17, 18) aufweist, an dem der y-Schlitten (28) angeordnet ist, und insbesondere
**dass** in der z-Richtung unterhalb des mindestens einen Querträger (17, 18) mindestens eine Durchfahröffnung (35, 36) für den Werkzeugtisch (23) ausgebildet ist.

6. Faserlegemaschine nach einem der Ansprüche 1 bis 5, **dadurch gekennzeichnet,**
**dass** das Maschinengestell (15) zwei Querträger (17, 18) aufweist, die in der x-Richtung beabstandet sind und an denen der y-Schlitten (28) verfahrbar angeordnet ist.

7. Faserlegemaschine nach einem der Ansprüche 1 bis 6, **dadurch gekennzeichnet,**
**dass** an dem y-Schlitten (28) ein z-Schlitten (31) angeordnet ist, der in der z-Richtung linear verfahrbar ist, und der Faserlegekopf (26) an dem z-Schlitten (31) angeordnet ist, und insbesondere
**dass** eine Steuereinheit (34) vorgesehen ist, die derart ausgebildet ist, dass der Faserlegekopf (26) zur Herstellung von dreidimensionalen Fasergelegen (3) während des Legens von Fasern (13) mittels des z-Schlittens (31) in der z-Richtung verfahrbar ist.

8. Faserlegemaschine nach einem der Ansprüche 1 bis 7, **dadurch gekennzeichnet,**
**dass** die Faser -Bereitstellungseinheit (42) mindestens ein Faserspulenlager (43, 44) und mindestens ein Umlenkelement (56) aufweist, wobei das mindestens eine Umlenkelement (56) relativ zu dem Faserlegekopf (26) gegenüberliegend zu dem mindestens einen Faserspulenlager (43, 44), insbesondere an dem y-Schlitten (28), angeordnet ist.

9. Faserlegemaschine nach einem der Ansprüche 1 bis 8, **dadurch gekennzeichnet,**
**dass** die Faser-Bereitstellungseinheit (42) mindestens ein Tänzermagazin (48, 49) zur Kompensation dynamischer Effekte von auf die Fasern (13) wirkenden Kräften aufweist.

10. Faserlegemaschine nach einem der Ansprüche 1 bis 9, **dadurch gekennzeichnet,**
**dass** der Faserlegekopf (26) innerhalb eines Maschinengehäuses (58) angeordnet ist,
**dass** eine Klimatisierungseinheit (63) zum Klimatisieren eines Innenraums (59) des Maschinengehäuses (58) vorgesehen ist, und insbesondere
**dass** in dem Maschinengehäuse (58) an der Beladeseite (8) und an der Entladeseite (10), Gehäuseöffnungen (60, 61) ausgebildet sind, die durch Abdeckelemente (62) verschließbar sind.

11. Faserlegeanlage zur Herstellung von Fasergelegen mit
- mindestens zwei Faserlegemaschinen (2) nach mindestens einem der Ansprüche 1 bis 10, und
- einer Fördereinrichtung (4, 5) zum Beladen der mindestens zwei Faserlegemaschinen (2) mit Formwerkzeugen (12), die insbesondere auf Formwerkzeug-Paletten (14) angeordnet sind, und/oder zum Entladen von Formwerkzeugen (12), die insbesondere auf Formwerkzeug-Paletten (14) angeordnet sind, aus den mindestens zwei Faserlegemaschinen (2).

12. Verfahren zur Herstellung von Fasergelegen umfassend die Schritte:
- Bereitstellen einer Faserlegemaschine (2) mit einem Werkzeugtisch (23) und einem Faserlegekopf (26), wobei die Faserlegemaschine (2) nach mindestens einem der Ansprüche 1 bis 11, ausgebildet ist,
- Automatisches Beladen des Werkzeugtischs (23) mit einem Formwerkzeug (12), das insbesondere auf einer Formwerkzeug-Palette (14) angeordnet ist,
- Legen von Fasern (13) auf das Formwerkzeug (12) mittels des Faserlegekopfs (26), und
- Automatisches Entladen des mit Fasern (13) belegten Formwerkzeugs (12), das insbesondere auf der Formwerkzeug-Palette (14) angeordnet ist, von dem Werkzeugtisch (23).

13. Verfahren nach Anspruch 12, **dadurch gekennzeichnet,**
**dass** das automatische Beladen an einer Beladeseite (8) der Faserlegemaschine (2) und das automatische Entladen an einer Entladeseite (10) der Faserlegemaschine (2) erfolgt, wobei die Entladeseite (10) insbesondere gegenüberliegend zu der Beladeseite (8) ausgebildet ist.

14. Verfahren nach Anspruch 12 oder 13, **dadurch gekennzeichnet,**
**dass** ein Beladen und/oder ein Entladen der Faserlegemaschine (2) mit Formwerkzeugen (12) parallel zu dem Beladen und/oder zu dem Entladen des Werkzeugtischs (23) und/oder zum Legen von Fasern (13) erfolgt.

15. Verfahren nach einem der Ansprüche 12 bis 14, **dadurch gekennzeichnet,**
**dass** zum automatischen Beladen und Entladen die Formwerkzeug-Paletten (14) mittels Spanneinheiten (27) auf dem Werkzeugtisch (23) mechanisch gespannt und gelöst werden.

16. Verfahren nach einem der Ansprüche 12 bis 15, **dadurch gekennzeichnet,**
**dass** zum automatischen Beladen und Entladen der Werkzeugtisch (23) mittels eines Schlittens (28) ausschließlich entlang einer Richtung linear verfahren wird.

## Claims

1. Fiber laying machine for producing laid fiber scrims, having
- a machine frame (15),
- an x carriage (21) which is linearly displaceable in a horizontal x direction,
- a tool table (23) for positioning a mold (12), said tool table (23) being arranged on the x carriage (21) and being pivotable about a vertically extending pivot axis (25),
- a fiber laying head (26) for laying fibers (13) on a mold (12), said fiber laying head (26) being arranged above the tool table (23) in a vertical z direction,
- a fiber supply unit (42) for supplying the fibers (13) to be laid by the fiber laying head (26),
wherein the fiber laying head (26) is linearly displaceable by means of a y carriage (28) in a horizontal y direction extending transversely to the x direction, wherein the fiber laying head (26) and the y carriage (28) are arranged on the machine frame (15),
**characterized**
**in that** the machine frame (15) has a machine bed (16) which extends in the x and y direction and on which the x carriage (21) is linearly displaceable or on which x guide rails (20) are arranged.

2. Fiber laying machine according to Claim 1,
**characterized**
**in that** the x carriage (21) is displaceable on x guide rails (20) which extend from a loading side (8) of the machine frame (15) to an unloading side (10) of the machine frame (15).

3. Fiber laying machine according to Claim 1 or 2,
**characterized**
**in that** the tool table (23) has a plurality of clamping units (27) for mechanically clamping and releasing mold pallets (14).

4. Fiber laying machine according to one of Claims 1 to 3,
**characterized**
**by** at least one pallet handling unit (37, 38) for loading the tool table (23) with a mold pallet (14) and/or for unloading a mold pallet (14) from the tool table (23), said pallet handling unit (37, 38) being arranged in particular on the loading side (8) and/or the unloading side (10) of the machine frame (15) .

5. Fiber laying machine according to one of Claims 1 to 4,
**characterized**
**in that** the machine frame (15) has at least one cross member (17, 18) which extends in the y direction and on which the y carriage (28) is arranged, and in particular
**in that** at least one passage opening (35, 36) for the tool table (23) is formed beneath the at least one cross member (17, 18) in the z direction.

6. Fiber laying machine according to one of Claims 1 to 5,
**characterized**
**in that** the machine frame (15) has two cross members (17, 18), which are spaced apart in the x direction and on which the y carriage (28) is arranged in a displaceable manner.

7. Fiber laying machine according to one of Claims 1 to 6,
**characterized**
**in that** a z carriage (31) is arranged on the y carriage (28), said z carriage being linearly displaceable in the z direction, and the fiber laying head (26) is arranged on the z carriage (31), and in particular
**in that** a control unit (34) is provided, which is configured such that the fiber laying head (26) is displaceable in the z direction by means of the z carriage (31) during the laying of fibers (13) in order to produce three-dimensional laid fiber scrims (3) .

8. Fiber laying machine according to one of Claims 1 to 7,
**characterized**
**in that** the fiber supply unit (42) has at least one fiber package store (43, 44) and at least one deflection element (56), wherein the at least one deflection element (56) is arranged, relative to the fiber laying head (26), opposite the at least one fiber package store (43, 44), in particular on the y carriage (28).

9. Fiber laying machine according to one of Claims 1 to 8,
**characterized**
**in that** the fiber supply unit (42) has at least one dancer magazine (48, 49) for compensating for dynamic effects of forces acting on the fibers (13).

10. Fiber laying machine according to one of Claims 1 to 9,
**characterized**
**in that** the fiber laying head (26) is arranged inside a machine housing (58),
**in that** an air-conditioning unit (63) for air-conditioning an interior (59) of the machine housing (58) is provided, and in particular
**in that** housing openings (60, 61) are formed in the machine housing (58) on the loading side (8) and on the unloading side (10), said housing openings (60, 61) being closable by covering elements (62).

11. Fiber laying installation for producing laid fiber scrims, having
- at least two fiber laying machines (2) according to at least one of Claims 1 to 10, and
- a conveying device (4, 5) for loading the at least two fiber laying machines (2) with molds (12) which are arranged in particular on mold pallets (14), and/or for unloading molds (12), which are arranged in particular on mold pallets (14), from the at least two fiber laying machines (2) .

12. Method for producing laid fiber scrims, comprising the steps of:
- providing a fiber laying machine (2) having a tool table (23) and a fiber laying head (26), wherein the fiber laying machine (2) is configured according to at least one of Claims 1 to 11,
- automatically loading the tool table (23) with a mold (12) which is arranged in particular on a mold pallet (14),
- laying fibers (13) on the mold (12) by means of the fiber laying head (26), and
- automatically unloading the mold (12) laid with fibers (13), which is arranged in particular on the mold pallet (14), from the tool table (23).

13. Method according to Claim 12, **characterized**
**in that** the automatic loading takes place on a loading side (8) of the fiber laying machine (2) and the automatic unloading takes place on an unloading side (10) of the fiber laying machine (2), wherein the unloading side (10) is formed in particular on the opposite side from the loading side (8).

14. Method according to Claim 12 or 13, **characterized in that** loading and/or unloading of the fiber laying machine (2) with molds (12) takes place parallel to the loading and/or to the unloading of the tool table (23) and/or to the laying of fibers (13).

15. Method according to one of Claims 12 to 14,
**characterized**
**in that,** for automatic loading and unloading, the mold pallets (14) are mechanically clamped to the tool table (23) by means of clamping units (27) and released.

16. Method according to one of Claims 12 to 15,
**characterized**
**in that,** for automatic loading and unloading, the tool table (23) is linearly displaced in only one direction by means of a carriage (28).

## Revendications

1. Machine de placement de fibres servant à la production de nappes de fibres, comprenant
- un bâti de machine (15),
- un chariot x (21) qui est déplaçable linéairement dans une direction x horizontale,
- un plateau porte-outil (23) servant au positionnement d'un outil de formage (12) qui est disposé sur le chariot x (21) et est pivotant autour d'un axe de pivotement (25) s'étendant verticalement,
- une tête de placement de fibres (26) servant au placement de fibres (13) sur un outil de formage (12), laquelle est disposée au-dessus du plateau porte-outil (23) dans une direction z verticale,
- une unité de fourniture de fibres (42) servant à la fourniture des fibres (13) devant être placées par la tête de placement de fibres (26),
dans laquelle la tête de placement de fibres (26) est déplaçable linéairement au moyen d'un chariot y (28) dans une direction y horizontale et s'étendant transversalement à la direction x, dans laquelle la tête de placement de fibres (26) et le chariot y (28) sont disposés sur le bâti de machine (15),
**caractérisée en ce que**
le bâti de machine (15) comprend un socle de machine (16) qui s'étend dans les directions x et y et sur lequel le chariot x (21) est déplaçable linéairement ou sur lequel des rails de guidage x (20) sont disposés.

2. Machine de placement de fibres selon la revendication 1, **caractérisée en ce que** le chariot x (21) est déplaçable sur des rails de guidage x (20) qui s'étendent d'un coté de chargement (8) du bâti de machine (15) à un côté de déchargement (10) du bâti de machine (15).

3. Machine de placement de fibres selon la revendication 1 ou 2, **caractérisée en ce que** le plateau porte-outil (23) comprend plusieurs unités de serrage (27) servant au serrage et au desserrage mécaniques de palettes d'outil de formage (14).

4. Machine de placement de fibres selon l'une des revendications 1 à 3, **caractérisée par** au moins une unité de manipulation de palettes (37, 38) pour charger le plateau porte-outil (23) avec une palette d'outil de formage (14) et/ou pour décharger une palette d'outil de formage (14) du plateau porte-outil (23), laquelle unité de manipulation est disposée en particulier au niveau du côté de chargement (8) et/ou du côté de déchargement (10) du bâti de machine (15).

5. Machine de placement de fibres selon l'une des revendications 1 à 4, **caractérisée**
**en ce que** le bâti de machine (15) comprend au moins une traverse (17, 18) s'étendant dans la direction y, traverse sur laquelle est disposé le chariot y (28), et en particulier
**en ce qu'**au moins une ouverture de passage (35, 36) pour le plateau porte-outil (23) est formée en dessous de ladite au moins une traverse (17, 18) dans la direction z.

6. Machine de placement de fibres selon l'une des revendications 1 à 5, **caractérisée**
**en ce que** le bâti de machine (15) comprend deux traverses (17, 18) qui sont espacées dans la direction x et sur lesquelles le chariot y (28) est disposé de manière déplaçable.

7. Machine de placement de fibres selon l'une des revendications 1 à 6, **caractérisée**
**en ce qu'**un chariot z (31) est disposé sur le chariot y (28), lequel chariot z est déplaçable linéairement dans la direction z, et la tête de placement de fibres (26) est disposée sur le chariot z (31), et en particulier
**en ce qu'**une unité de commande (34) est prévue, laquelle est réalisée de telle sorte que la tête de placement de fibres (26) est déplaçable dans la direction z au moyen du chariot z (31) pendant le placement de fibres (13) pour la production de nappes de fibres (3) tridimensionnelles.

8. Machine de placement de fibres selon l'une des revendications 1 à 7, **caractérisée en ce que**
l'unité de fourniture de fibres (42) comprend au moins un magasin de bobines de fibres (43, 44) et au moins un élément de déviation (56), ledit au moins un élément de déviation (56) étant disposé, par rapport à la tête de placement de fibres (26), de manière opposée audit au moins un magasin de bobines de fibres (43, 44), en particulier sur le chariot y (28).

9. Machine de placement de fibres selon l'une des revendications 1 à 8, **caractérisée en ce que**
l'unité de fourniture de fibres (42) comprend au moins un magasin compensateur (48, 49) pour la compensation d'effets dynamiques de forces agissant sur les fibres (13).

10. Machine de placement de fibres selon l'une des revendications 1 à 9, **caractérisée**
**en ce que** la tête de placement de fibres (26) est disposée à l'intérieur d'un carter de machine (58),
**en ce qu'**une unité de climatisation (63) pour la climatisation d'un espace intérieur (59) du carter de machine (58) est prévue, et en particulier
**en ce que** des ouvertures de carter (60, 61) sont formées dans le carter de machine (58) au niveau du côté de chargement (8) et du côté de déchargement (10), lesquelles ouvertures peuvent être fermées par des éléments de recouvrement (62).

11. Installation de placement de fibres servant à la production de nappes de fibres, comprenant
- au moins deux machines de placement de fibres (2) selon au moins l'une des revendications 1 à 10, et
- un dispositif de transport (4, 5) pour charger lesdites au moins deux machines de placement de fibres (2) avec des outils de formage (12) qui sont disposés en particulier sur des palettes d'outil de formage (14), et/ou pour décharger des outils de formage (12), qui sont disposés en particulier sur des palettes d'outil de formage (14), desdites au moins deux machines de placement de fibres (2).

12. Procédé de production de nappes de fibres comportant les étapes suivantes :
- fourniture d'une machine de placement de fibres (2) comprenant un plateau porte-outil (23) et une tête de placement de fibres (26), la machine de placement de fibres (2) étant réalisée selon au moins l'une des revendications 1 à 11,
- chargement automatique du plateau porte-outil (23) avec un outil de formage (12) qui est disposé en particulier sur une palette d'outil de formage (14),
- placement de fibres (13) sur l'outil de formage (12) au moyen de la tête de placement de fibres (26), et
- déchargement automatique de l'outil de formage (12) garni de fibres (13), qui est disposé en particulier sur la palette d'outil de formage (14), du plateau porte-outil (23).

13. Procédé selon la revendication 12,
**caractérisé en ce que**
le chargement automatique s'effectue au niveau d'un côté de chargement (8) de la machine de placement de fibres (2) et le déchargement automatique s'effectue au niveau d'un côté de déchargement (10) de la machine de placement de fibres (2), le côté de déchargement (10) étant réalisé en particulier de manière opposée au côté de chargement (8).

14. Procédé selon la revendication 12 ou 13, **caractérisé**
**en ce qu'**un chargement et/ou un déchargement de la machine de placement de fibre (2) comprenant des outils de formage (12) s'effectuent parallèlement au chargement et/ou au déchargement du plateau porte-outil (23) et/ou au placement de fibres (13).

15. Procédé selon l'une des revendications 12 à 14, **caractérisé en ce que**,
pour le chargement et le déchargement automatiques, les palettes d'outils de formage (14) sont serrées et desserrées mécaniquement sur le plateau porte-outil (23) au moyen d'unités de serrage (27).

16. Procédé selon l'une des revendications 12 à 15, **caractérisé en ce que**,
pour le chargement et le déchargement automatiques, le plateau porte-outil (23) est déplacé linéairement exclusivement le long d'une direction au moyen d'un chariot (28).
